Europäisches Patentamt

European Patent Office

Office européen des brevets

(11) Veröffentlichungsnummer: **0 199 960 B1**

(12) **EUROPÄISCHE PATENTSCHRIFT**

(45) Veröffentlichungstag der Patentschrift: **09.12.92**

(51) Int. Cl.⁵: **F16K 11/074**

(21) Anmeldenummer: **86103638.2**

(22) Anmeldetag: **18.03.86**

(54) **Mischventil.**

(30) Priorität: **26.03.85 DE 3510833**

(43) Veröffentlichungstag der Anmeldung:
**10.12.86 Patentblatt 86/45**

(45) Bekanntmachung des Hinweises auf die
Patenterteilung:
**09.12.92 Patentblatt 92/50**

(84) Benannte Vertragsstaaten:
**AT BE CH DE FR GB IT LI NL SE**

(56) Entgegenhaltungen:
**EP-A- 0 140 275**
**DE-A- 3 219 574**

(73) Patentinhaber: **FRIEDRICH GROHE AKTIENGE-
SELLSCHAFT**
**Hauptstrasse 137**
**W-5870 Hemer(DE)**

(72) Erfinder: **Pawelzik, Manfred**
**Herringser Weg 5a**
**W-4770 Soest(DE)**

Rank Xerox (UK) Business Services

**Beschreibung**

Die Erfindung betrifft ein Mischventil.

Ein gattungsgemäßes Mischventil ist aus der nicht vorveröffentlichten EP-A-0 140 275 bekannt geworden.

Bei Mischventilen dieser Gattung wird es häufig als Nachteil empfunden, daß zwischen dem Armaturenkörper und dem drehbaren Hebelkopfgehäuse, z.B. aufgrund von Fertigungstoleranzen, ein Ringspalt besteht, in den sich Verunreinigungen, Putzmittel etc. einlagern bzw. derartige Partikel in das Hebelkopfgehäuse gelangen können. Hierdurch kann die Betätigung des Mischventils beeinträchtigt werden. Darüber hinaus ist ein entsprechender Spalt aber auch aus hygienischen Gründen unerwünscht.

Der Erfindung liegt die Aufgabe zugrunde, den Übergang zwischen Armatur und Hebelkopfgehäuse zu verbessern.

Diese Aufgabe wird erfindungsgemäß durch den Gegenstand gemäß Anspruch 1 gelöst.

Weitere Ausgestaltungen der Erfindung sind in den Ansprüchen 2 bis 6 angegeben.

Ein Ausführungsbeispiel der Erfindung ist in der Zeichnung dargestellt und wird im folgenden näher erläutert. Es zeigt

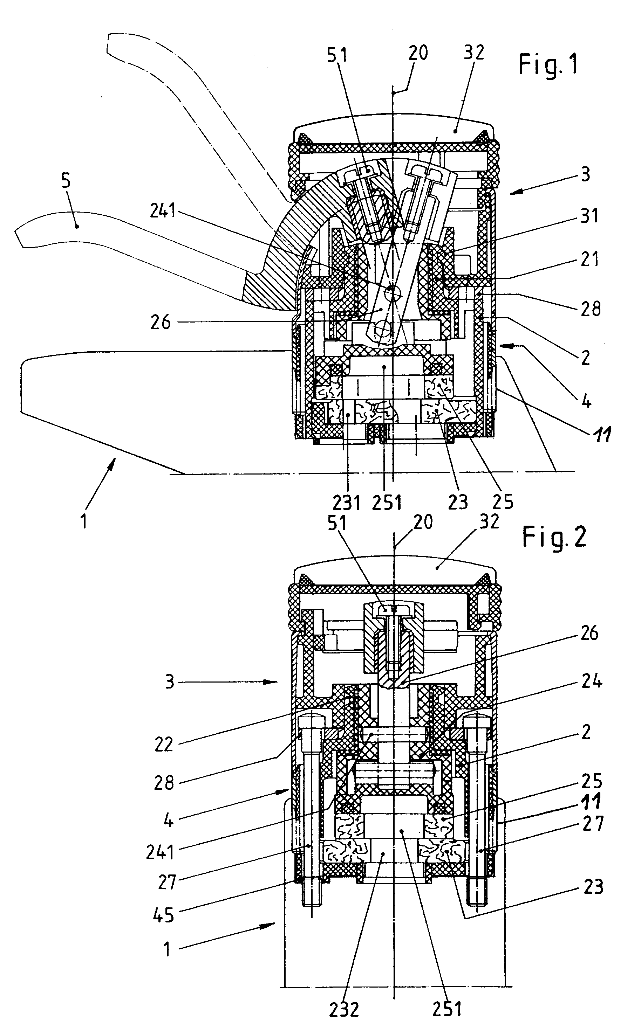

Figur 1 ein in einer Sanitärarmatur angeordnetes Mischventil in Seitenansicht, teilweise geschnitten;

Figur 2 das Mischventil gemäß Figur 1 in Rückansicht, teilweise geschnitten;

Figur 3 das Mischventil gemäß Figur 1 in Vorderansicht;

Figur 4 eine Mantelhülse im Längsschnitt.

In einer teilweise dargestellten Armatur 1 ist in einer Aufnahmebohrung 11 ein in einem Sondergehäuse 2 gekapselt angeordnetes Mischventil eingesetzt. Als Ventilelemente sind zwei aufeinanderliegende Ventilscheiben vorgesehen, wobei eine Ventilsitzscheibe 23 im Sondergehäuse 2 ortsfest gehaltert und mit Durchtrittsöffnungen 231 für das aus der Armatur 1 zugeführte Kalt- und Warmwasser sowie einer Rückführungsöffnung 232 für das Mischwasser versehen ist. An der Ventilsitzscheibe 23 ist eine Steuerscheibe 25 verschiebbar angelagert und mit einem Überströmkanal 251 versehen. Die Steuerscheibe 25 wird dabei zur einen Hälfte von einer Keramikplatte gebildet und zur anderen Hälfte von einer Abdeck- und Führungsscheibe, welche beide formschlüssig und gedichtet miteinanderverbunden sind. Beide aneinanderliegende Scheibenbereiche der Ventilsitzscheibe 23 und der Steuerscheibe 25 sind aus einem verschleißfesten Keramikmaterial hergestellt und liegen mit ihren durch entsprechende Feinstbearbeitung geglätteten Stirnflächen wasserdicht aneinander. An der von der Ventilsitzscheibe 23 abgekehrten Stirnseite der Steuerscheibe 25 ist ein Stellhebel 26 angelenkt. Der Stellhebel 26 ist dabei in einer im Sondergehäuse 2 axial festliegend aber drehbar gehalterten Buchse 24 um eine Schwenkachse 241 schwenkbar gelagert. Der Überströmkanal 251 in der Steuerscheibe 25 sowie die Durchtrittsöffnungen 231 und die Rückführungsöffnung 232 in der Ventilsitzscheibe 23 sind so angeordnet und bemessen, daß durch eine Drehbewegung um die Mittelachse 20 das Mischungsverhältnis von Kalt- und Warmwasser und durch eine Schwenkbewegung um die Schwenkachse 241 die Gesamtdurchflußmenge eingestellt werden können.

Im Bereich der Buchse 24 ist das Sondergehäuse 2 mit einem Ansatz 21 versehen, an dem an der Außenseite eine umlaufende Ringnut 22 ausgebildet ist. Das Sondergehäuse 2 ist außerdem mit Befestigungsschrauben 27 über eine Haltescheibe 28 fest mit der Armatur 1 verbunden. Auf dem Ansatz 21 ist ein Hebelkopfgehäuse 3 gelagert und mittels Schnappzungen 31, die in die Ringnut 22 einschnappen, axial festliegend gehalten. In der Seitenwandung des Hebelkopfgehäuses 3 ist ein Schlitz ausgebildet, durch den ein Handhebel 5 mit einem Kreisbogen, dessen Mittelpunkt von der Schwenkachse 241 gebildet ist, hindurchgeführt ist. Der Handhebel 5 ist mit dem Stellhebel 26 durch eine Schraube 51 verbunden. Das Hebelkopfgehäuse 3 ist schließlich an der oberen Stirnseite mit einer verrastbaren Haube 32 verschlossen.

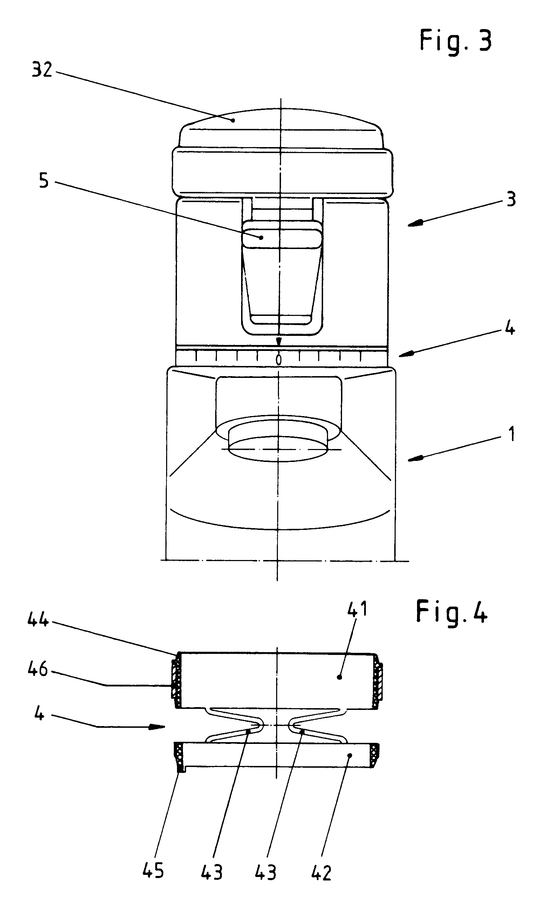

Durch die Fertigungstoleranzen der Ventilsitzscheibe 23 der Steuerscheibe 25, Buchse 24 ist der Abstand der Ringnut 22 zur Armatur 1 individuell verschieden. Zur Abdichtung des durch die Fertigungstoleranzen bedingten Spaltes zwischen Hebelkopfgehäuse 3 und der Armatur 1 ist eine Mantelhülse 4 an der Aufnahmebohrung 11 angeordnet. Wie insbesondere der Figur 4 zu entnehmen ist, wird die Mantelhülse 4 von einem oberen Teil 41 und einem unteren Teil 42 gebildet, wobei die beiden Teile durch Federarme 43 miteinander verbunden sind. Die Aufnahmebohrung 11 hat im Grund im Bereich einer Befestigungsschraube 27 eine Einsenkung, in die ein Zapfen 45 des unteren Teils 42 einfaßt und eine drehfeste Halterung zur Armatur 1 herstellt. Neben dieser formschlüssigen Halterung kann auch durch eine im Grund verengt ausgebildete Aufnahmebohrung 11 der untere Teil 42 durch Reibschluß mit der Armatur 1 drehfest verbunden werden. Das obere Teil 41 der Mantelhülse 4 ist verdeckt ausgebildet und verschiebbar in einem erweiterten Bereich der Aufnahmebohrung 11 gelagert. An der Stirnseite des oberen Teils 41 ist ein in das Hebelkopfgehäuse 3 einfassender Kragen 44 angeordnet, so daß eine konzentrische Lagerung der beiden Teile gewährleistet ist. Aus optischen Gründen ist der obere Teil 41 unterhalb der Stirnfläche mit einem Metallring 46 versehen, der axial durch Schnappnasen an dem oberen Teil 41 gesichert ist. Durch die Federarme 43 ist nun unabhängig von den Fertigungstoleranzen eine dichte Anlage des Hebelkopfgehäuses 3 an der Armatur 1 bzw. an der Mantelhülse 4 gewährleistet. Maßdifferenzen von 2 mm in axialer Richtung können mühelos überbrückt werden.

**Patentansprüche**

1. Mischventil, insbesondere für Kalt- und Warmwasser, bei dem mit einem Handhebel (5) das Mischungsverhältnis und die Gesamtdurchflußmenge einstellbar sind, wobei:
   - die Ventilelemente in einem Kartuschen- oder Sondergehäuse (2) gekapselt angeordnet sind;
   - der mit einem Ventilelement verbundene, um zwei senkrecht zueinander im Ventilgehäuse angeordnete Drehachsen verschwenkbare, Handhebel (5) aus einem um die Mittelachse (20) drehbar auf einer Armatur (1) gehaltenen Hebelkopfgehäuse (3) herausgeführt ist;
   - das Hebelkopfgehäuse (3) auf dem Kartuschen- oder Sondergehäuse (2) befestigt ist; und
   - zwischen dem Hebelkopfgehäuse (3) und der Armatur (1) eine drehfest an der Armatur (1) gehaltene Mantelhülse (4) angeordnet ist, deren oberer Teil (41) durch Federelemente (43) vom unteren Teil (42) gegen die Stirnseite des Hebelkopfgehäuses (3) gestrammt ist.

2. Mischventil nach Anspruch 1, dadurch gekennzeichnet, daß die Mantelhülse (4) einstückig ausgebildet und zwischen dem oberen und unteren Teil (41,42) mit Federarmen (43) verbunden ist.

3. Mischventil nach Anspruch 1 und/oder 2, dadurch gekennzeichnet, daß die Mantelhülse (4) aus Kunststoff im Spritzgußverfahren hergestellt ist.

4. Mischventil nach wenigstens einem der Ansprüche 1 bis 3, dadurch gekennzeichnet, daß die Aufnahmebohrung (11) in der Armatur (1) im Grund verengt ausgebildet und in diesem Bereich durch einen Zapfen (45) und/oder Reibschluß etc. mit dem unteren Teil (42) der Mantelhülse drehfest verbunden ist, wobei der obere Teil (41) der Mantelhülse (4) entsprechend einem erweitert ausgebildeten Teil der Aufnahmebohrung (11) verdickt ausgebildet ist und einen in das Hebelkopfgehäuse (3) einfassenden Kragen (44) zur Führung hat.

5. Mischventil nach Anspruch 4, dadurch gekennzeichnet, daß im Bereich des Austritts der Aufnahmebohrung (11) auf dem oberen Teil (41) der Mantelhülse (4) ein Metallring (46) aufgeschnappt ist.

6. Mischventil nach wenigstens einem der Ansprüche 1 bis 5, dadurch gekennzeichnet, daß das Hebelkopfgehäuse (3) auf einem vorkragenden Ansatz (21) des Sondergehäuses (2) durch Schnappzungen (31), die in eine Ringnut (22) einfassen, axial festliegend und drehbar gehaltert ist.

**Claims**

1. Mixing valve, especially for cold and hot water, in which the mixing ratio and the total rate of flow are adjustable by means of a hand lever (5), wherein:
   - the valve elements are enclosed in a cartridge housing or separate housing (2);
   - the hand lever (5), which is connected to a valve element and is pivotable about two rotation axes arranged perpendicularly to each other in the valve housing, is led out of a lever head housing (3) that is secured on a fitting (1) so as to be rotatable about the central axis (20);
   - the lever head housing (3) is fastened onto the cartridge housing or separate housing (2); and
   - arranged between the lever head housing (3) and the fitting (1) there is a casing sleeve (4) which is non-rotatably secured on the fitting (1) and the upper part (41) of which is urged tightly, by means of spring elements (43),by the lower part (42) towards the end face of the lever head housing (3).

2. Mixing valve according to Claim 1, characterised in that the casing sleeve (4) is formed in one piece and its upper and lower part (41,42) are connected by spring arms (43).

3. Mixing valve according to Claim 1 and/or 2, characterised in that the casing sleeve (4) is produced from plastics material by the injection-moulding process.

4. Mixing valve according to at least one of Claims 1 to 3, characterised in that the receiving bore (11) in the fitting (1) is narrowed at the bottom and in this region is non-rotatably connected by means of a plug (45) and/or friction etc. to the lower part (42) of the casing sleeve, the upper part (41) of the casing sleeve (4) being thickened to correspond to a widened part of the receiving bore (11) and having a collar (44) engaging in the lever head housing (3) for guiding.

5. Mixing valve according to Claim 4, characterised in that in the region of the outlet of the receiving bore (11) a metal ring (46) is snapped onto the upper part (41) of the casing sleeve (4).

6. Mixing valve according to at least one of Claims 1 to 5, characterised in that by means of snap tongues (31), which engage in an annular groove (22), the lever head housing (3) is secured on a projecting extension (21) of the separate housing (2) so as to be fixed in an axial direction and to be rotatable.

**Revendications**

1. Robinet mélangeur notamment d'eau froide et d'eau chaude dont une poignée (5) permet de régler le rapport de mélange et le débit total,
   - les éléments de robinet sont encapsulés dans un boîtier cartouche ou boîtier particulier (2),
   - le levier poignée (5) relié à un élément de robinet peut pivoter autour de deux axes de rotation perpendiculaires, dans le boîtier de robinet, le levier (5) sortant d'un boîtier de tête de levier (3) maintenu à rotation autour de l'axe central (20) du corps de robinet (1),
   - le boîtier de tête de levier (3) est fixé sur le boîtier à cartouche ou boîtier particulier (2) et
   - entre le boîtier à tête de levier (3) et le robinet (1) il y a un manchon (4) maintenu solidairement en rotation sur le corps de robinet (1) et dont la partie supérieure (41) est poussée par des éléments à ressort (43), par la partie inférieure (42) contre la face frontale du boîtier de tête de levier (3).

2. Robinet mélangeur selon la revendication 1, caractérisé en ce que le manchon (4), en une seule pièce, est relié entre la partie supérieure et la partie inférieure (41, 42) à des bras à ressort (43).

3. Robinet mélangeur selon la revendication 1 et/ou 2, caractérisé en ce que le manchon enveloppe (4) est en matière synthétique fabriquée par injection.

4. Robinet mélangeur selon au moins l'une des revendications 1 à 3, caractérisé en ce que l'alésage de réception (11) dans le corps de robinet (1) rétréci à la base, est relié solidairement en rotation à cet endroit par un téton (45) et/ou par une liaison de friction à la partie inférieure (42) du manchon, la partie supérieure 41 du manchon (4) étant renforcée de manière correspondante à la partie élargie de l'alésage de réception (11), et comporte un collet (44) enserrant le boîtier de tête de levier (3).

5. Robinet mélangeur selon la revendication 4, caractérisé en ce qu au niveau de la sortie de l'alésage de réception (11), un anneau métallique (46) est enclipsé sur la partie supérieure (41) du manchon (4).

6. Robinet mélangeur selon au moins l'une des revendications 1 à 5, caractérisé en ce que le boîtier de tête de levier (3) est fixé axialement et bloqué en rotation sur un prolongement en saillie (21) du boîtier particulier (2) par des languettes d'enclipsage (31) qui pénètrent dans une rainure annulaire (22).

Fig.1

Fig.2

Fig. 3

32

5

3

4

1

Fig. 4

44

46

41

4

45   43   43   42